(19) Europäisches Patentamt
European Patent Office
Office européen des brevets

(11) **EP 2 034 290 A2**

(12) **EUROPÄISCHE PATENTANMELDUNG**

(43) Veröffentlichungstag:
**11.03.2009 Patentblatt 2009/11**

(51) Int Cl.:
*G01N 1/38* (2006.01)    *G01N 21/78* (2006.01)

(21) Anmeldenummer: 08162130.2

(22) Anmeldetag: **11.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **04.09.2007   DE 102007041740**

(71) Anmelder: **Endress+Hauser Conducta Gesellschaft für Mess- und Regeltechnik mbH+Co. KG 70839 Gerlingen (DE)**

(72) Erfinder:
• **Kathe, Ulrich**
  **71229, Leonberg (DE)**
• **Schipolowski, Thomas**
  **70567, Stuttgart (DE)**
• **Steuerwald, Ralf**
  **71735, Eberdingen (DE)**

(74) Vertreter: **Andres, Angelika Maria**
**Endress+Hauser (Deutschland) AG+Co. KG PatServe Colmarer Strasse 6 79576 Weil am Rhein (DE)**

(54) **Vorrichtung zur Analyse von Flüssigkeitsproben**

(57)    Eine Vorrichtung zur Analyse von Flüssigkeitsproben, welche zur Analyse mit mindestens einem Reagenz zu mischen sind, umfasst: eine Mischvorrichtung 1, 3, 5 mit mindestens einer Förderpumpe 1,3 zum Mischen der Flüssigkeitsprobe mit dem Reagenz in einem definierten Mischungsverhältnis; mindestens einem Sensor 6 zum Erfassen einer Eigenschaft des Gemischs aus der Flüssigkeitsprobe und dem Reagenz, anhand derer eine Messgröße der Flüssigkeitsgröße zu bestimmen ist; und eine Auswertungseinheit, welche anhand mindestens eines Signals mindestens eines Sensors bzw. anhand des zeitlichen Verlaufes eines Signals zumindest eines Sensors die Funktion der Mischvorrichtung überprüft.

**Fig. 1**

EP 2 034 290 A2

**Beschreibung**

Die vorliegende Erfindung betrifft eine Vorrichtung zur Analyse von Flüssigkeitsproben, insbesondere einen photometrischen Analysator.

Photometrische Analysatoren führen gewöhnlich eine
Absorptionsmessung an einem Gemisch aus einer Flüssigkeitsprobe und mindestens einem zugesetzten Reagenz aus. Der Zusatz eines Reagenz ist erforderlich, um eine Farbreaktion ablaufen zu lassen, wobei die Farbtiefe einerseits von der Konzentration des Analyten in der Flüssigkeitsprobe und andererseits von dem Mischungsverhältnis zwischen Flüssigkeitsprobe und Reagenz bzw. den Reagenzien abhängt.

Daraus folgt, dass das Mischungsverhältnis eine kritische Größe ist, die möglichst genau einzuhalten ist.

Die Beförderung der Flüssigkeiten in einem photometrischen Analysator erfolgt gewöhnlich durch eine oder mehrere Schlauchpumpen. Schlauchpumpen weisen insbesondere die folgenden Vorteile auf: Sie sind preiswert, sie sind einfach zu handhaben, die Flüssigkeit kommt nur mit dem Schlauch in Berührung, wodurch Korrosion vermieden wird, sie sind über einen großen Bereich von Förderraten einsetzbar, nämlich zwischen Mikroliter pro Stunde bis Litern pro Minute, und mehrere Pumpenkanäle lassen sich mit einem Pumpenantrieb betreiben.

Schlauchpumpen weisen jedoch die folgenden Einschränkungen auf.

Die Förderrate ist über den Lebenszyklus des Schlauches nicht konstant. Grob gesagt lässt sich der Lebenszyklus eines Schlauches in drei Phasen einteilen, nämlich erstens eine kurze Einlaufsphase, in welcher die Förderrate moderat sinkt, zweitens folgt eine lange Phase relativer Konstanz der Förderrate, und drittens nimmt die Förderrate gegen Ende des Lebenszyklus zunächst schleichend und dann rapide ab.

Photometer werden meist zyklisch im Batchverfahren betrieben, d.h. die Küvette wird nach der photometrischen Bestimmung von dem analysierten Gemisch der Vorgängeranalyse befreit. Dies geschieht entweder durch ausreichendes Spülen mit einer im untersuchten Wellenlängenbereich nicht absorbierter Spülflüssigkeit oder mit der Probe selbst. Dabei kann die Küvettenreinigung durch vorbereitendes Entleeren der Küvette, zum Beispiel durch Absaugen mittels Pumpe oder durch Ablassen mittels Ablassventil, wirksam unterstützt werden. Ziel bei diesen Reinigungsoperationen soll es sein, die Farbverschleppung von Farbstoffgemisch auf die nächste Analyse zu minimieren. In einem nächsten Schritt wird die Küvette mit dem Gemisch aus Probe und Reagenz bzw. Reagenzien gefüllt. Nach Ablauf der Reaktionszeit wird die Absorptionsmessung durchgeführt. Wie bereits eingangs erwähnt, ist das Mischungsverhältnis zwischen Reagenzien und Probe zur Vermeidung von Verdünnungsfehlern kritisch. Weiterhin geht es auch um die Einhaltung vorbestimmter Reaktionsbedingungen, zum Beispiel pH, Pufferkapazität, Überschuss an Reaktanten bei komplexen Reaktionen. Werden diese nicht eingehalten, können größere Messfehler auftreten.

Um diese Fehler zu vermeiden, gibt es verschiedene Maßnahmen, um Veränderungen der Mischungsverhältnisse aufgrund der Alterung der Schläuche zu vermeiden. An erster Stelle ist hier die regelmäßige Neujustierung des Geräts mit einer Standardlösung zu nennen. Die Verschiebung der Reaktionsbedingungen durch sich ändernde Mischungsverhältnisse lässt sich aber durch eine Neujustierung nicht korrigieren.

Zweitens können die Schläuche vorsorglich schon nach relativ kurzer Zeit ausgewechselt werden, wenn sich die Schläuche noch mit ausreichend hoher Wahrscheinlichkeit in der zweiten Phase des Lebenszyklus mit einem stabilen Pumpverhalten befinden, obwohl die Schläuche physikalisch noch sehr lange ihren Dienst leisten könnten. Dies bedeutet letztlich einen unnötig hohen Wartungsaufwand und eine Materialverschwendung.

Schließlich werden die Reagenzien oft höher konzentriert angesetzt als die Stöchiometrie erfordern würde, um eventuelle Verdünnungen durch Pumpenfehler ausgleichen zu können. Dies bedeutet jedoch Ressourcenverschwendung und nicht optimale Reaktionsbedingungen, sowie ggf. eine Umweltbelastung.

Es ist daher die Aufgabe der vorliegenden Erfindung, eine Vorrichtung zur Analyse von Flüssigkeitsproben sowie ein Verfahren zu deren Betrieb bereit zu stellen, welches die Nachteile des Standes der Technik überwindet.

Die Aufgabe wird erfindungsgemäß gelöst durch die Vorrichtung gemäß des unabhängigen Patentanspruchs 1.

Die erfindungsgemäße Vorrichtung zur Analyse von Flüssigkeitsproben, welche zur Analyse mit mindestens einem Reagenz zu mischen sind, umfasst: eine Mischvorrichtung mit mindestens einer Förderpumpe zum Mischen der Flüssigkeitsprobe mit dem Reagenz in einem definierten Mischungsverhältnis; mindestens einem Sensor zum Erfassen einer Eigenschaft des Gemischs aus der Flüssigkeitsprobe und dem Reagenz, wobei anhand der Eigenschaft eine Messgröße der Flüssigkeitsprobe zu bestimmen ist; und eine Auswertungseinheit, welche anhand mindestens eines Signals mindestens eines Sensors bzw. anhand des zeitlichen Verlaufes eines Signals zumindest eines Sensors die Funktion der Mischvorrichtung überprüft.

Gemäß einer Ausgestaltung der Erfindung ist die Auswertungseinheit dazu ausgelegt, anhand eines Sprungs eines Sensorsignals als Funktion der Zeit den Durchlauf einer Flüssigkeitsfront an dem mindestens einen Sensor zu detektieren und daraus die Förderleistung der Förderpumpe bzw. die Summe der Förderleistungen mehrerer Pumpen abzuleiten.

In einer Weiterbildung dieser Ausgestaltung der Erfindung weist die Vorrichtung mindestens zwei Sensoren auf, die in einem Flüssigkeitspfad zueinander beabstandet sind, wobei anhand der zeitlichen Differenz der Signalsprünge am ersten und zweiten Sensor die Geschwindigkeit der Flüssigkeitsfront und damit die Förderleistung der Pumpe bzw. die Summe der Förderleistungen mehrerer Pumpen zu bestimmen ist.

Eine zweite Ausgestaltung der Erfindung beruht darauf, dass in manchen Fällen der zeitliche Verlauf des Sensorsignals bei einer gegebenen Flüssigkeitsprobe vom Mischungsverhältnis zwischen der Flüssigkeitsprobe und dem mindestens einen Reagenz bzw. mehrerer Reagenzien abhängt, wobei die Auswertungseinheit gemäß dieser Ausgestaltung der Erfindung dazu ausgelegt ist, anhand des zeitlichen Verlaufs des Sensorsignals das Mischungsverhältnis zwischen der Flüssigkeitsprobe und dem mindestens einen Reagenz bzw. der Reagenzien zu überprüfen.

Die erfindungsgemäße Vorrichtung kann insbesondere einen photometrischen Analysator umfassen.

In einer Weiterbildung der Erfindung umfasst die mindestens eine Förderpumpe der Mischvorrichtung mindestens eine Schlauchpumpe.

Die Erfindung wird nun anhand der in den Zeichnungen dargestellten Ausführungsbeispiele erläutert. Es zeigt:

Fig. 1: Eine schematische Darstellung einer erfindungsgemäßen Analysevorrichtung;

Fig. 2.: Den zeitlichen Verlauf einiger Signale einer Analysevorrichtung gemäß eines ersten Ausführungsbeispiels der vorliegenden Erfindung;

Fig. 3.: Den zeitlichen Verlauf eines Sensorsignals unter verschiedenen Randbedingungen zur Erläuterung eines zweiten Ausführungsbeispiels einer Analysevorrichtung gemäß der vorliegenden Erfindung; und

Fig. 4.: Eine graphische Darstellung eines Zusammenhangs zwischen dem Mischungsverhältnis von Reagenzien und der Zeitkonstante des Sensorsignals aus Fig. 3.

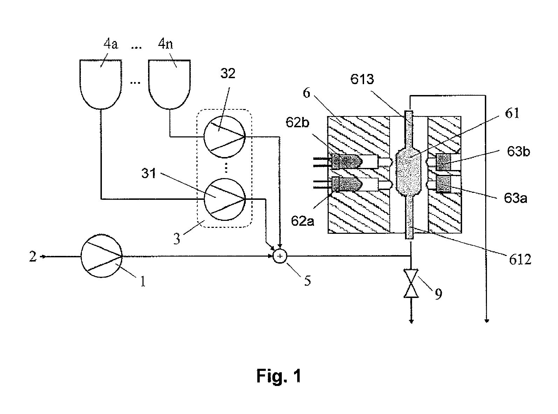

Die in Fig. 1 schematisch dargestellte Analysevorrichtung umfasst eine Förderpumpe 1, mit der durch eine Leitung 2 eine Probe in die Vorrichtung gepumpt wird. Zum Nachweis eines in der Probe enthaltenen Analyten sind der Probe Reagenzien zuzusetzen, hierzu ist eine Pumpenbatterie 3 vorgesehen, welche im Ausführungsbeispiel eine erste Reagenzienförderpumpe 31 und eine zweite Reagenzienförderpumpe 32 umfasst, welche jeweils Reagenzien aus zugeordneten Reagenzienbehältern 4a bzw. 4b zu einem Einlaufpunkt 5 fördern, an dem die Reagenzien mit der Probe zusammengeführt werden. Von dort gelangt die mit den Reagenzien versetzte Probe in einen optischen Analysator 6, welcher eine Küvette 61 umfasst, die von einer ersten Lichtquelle 62a und einer zweiten Lichtquelle 62b durchstrahlt wird, wobei die zweite Lichtquelle bezogen auf die Flussrichtung einer in die Küvette geförderten Flüssigkeit beabstandet zur ersten Lichtquelle nach letzterer positioniert ist. Die optische Analysevorrichtung 6 umfasst weiterhin eine erste Photozelle 63a und eine zweite Photozelle 63b, die im Strahlengang des in der ersten bzw. zweiten Lichtquelle emittierten Lichtes jenseits der Küvette angeordnet sind. Die erste Lichtquelle und die erste Photozelle arbeiten bei einer anderen Wellenlänge bzw. einem anderen Wellenlängenbereich als die zweite Lichtquelle und die zweite Photozelle, wobei das Signal der ersten Photozelle von der Konzentration des Analyten eine andere Abhängigkeit aufweist, als das Signal der zweiten Photozelle. Im Idealfall ist das Signal der zweiten Photozelle völlig unabhängig von der Konzentration des Analyten, während das Signal der ersten Photozelle eine starke Abhängigkeit von der Analytenkonzentration aufweist. Das zweite Signal dient somit als Referenzsignal, um beispielsweise Trübungseinflüsse auf das Signal der ersten Photozelle ermitteln zu können.

Der erfindungsgemäße Sensor kann einerseits in einem kontinuierlichen Durchflussverfahren betrieben werden, wobei in diesem Fall die Mischung aus Probe und Reagenzien kontinuierlich über einen Zulauf 612 und einen Ablauf 613 durch die Küvette 61 gepumpt werden.

In dieser Variante muss die Förderrate der Mischung jedoch so gering sein, dass die Nachweisreaktion zwischen Probe und Reagenzien bereits abgeschlossen ist, wenn die Mischung durch die Strahlengänge in der Küvette verläuft. Wenngleich dieser Betrieb grundsätzlich möglich ist, kann mit ihm die korrekte Funktionsweise der Mischvorrichtung sowie die vollständige Reaktion von Reagenzien und Probe nicht überwacht werden. Insoweit ist ein Chargenprozess vorzuziehen. Hierbei wird jeweils eine Mischung aus Probe und Reagenzien durch den Zulauf 612 in die Küvette gepumpt, bis diese ausreichend gefüllt ist, woraufhin der Zufluss der Mischung in die Küvette abgeschaltet wird. Anschließend wird ausreichend Zeit gegeben, dass die Reaktion zwischen Reagenzien und der Probe vollständig erfolgen kann, wobei dies anhand des Signals der ersten Photozelle überwacht wird. Nach vollständigem Ablauf der Reaktion und Erfassen der Signale der ersten und der zweiten Photozelle wird die Küvette über den Zulauf 612 und das Auslassventil 9 entleert. Nach dem Schließen des Ventils 9 kann die Küvette erneut mit einer Mischung aus Reagenzien und Probe befüllt werden. Ggf. können zwischen den einzelnen Befüllungen Spülgänge vorgesehen sein.

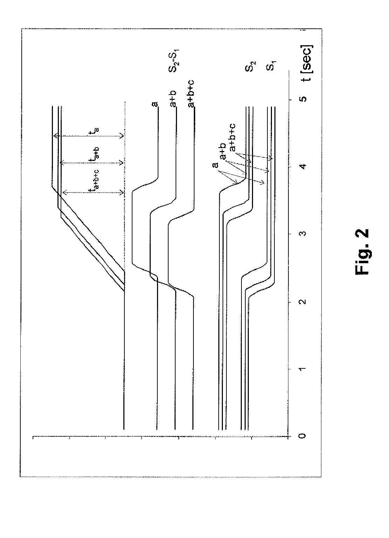

In dem zuvor beschriebenen Chargenbetrieb gibt es nun zwei Ansätze, um die Förderleistung der Pumpe bzw. der Pumpen zu überwachen, wie anhand von Fig. 2 erläutert werden soll. Fig. 2 zeigt in den unteren beiden Gruppen von Kurven die Ausgangssignale $S_1$ der ersten Photozelle und $S_2$ der zweiten Photozelle für verschiedene Betriebszustände der Mischvorrichtung. Bei den mit a gekennzeichneten Kurven läuft nur die Förderpumpe für die Probe, während bei den mit a+b gekennzeichneten Kurven die Förderpumpe 1 für die Probe und eine erste Förderpumpe 31 für ein erstes Reagenz laufen. Bei den mit a+b+c gekennzeichneten Kurven läuft die Förderpumpe 1 für die Probe, die Förderpumpe 31 für ein erstes Reagenz und eine Förderpumpe 32 für ein zweites Reagenz.

Die Förderpumpen für die Reagenzien können auch so gestaltet sein dass ein Pumpenkopf mit einem Antrieb mehrere parallel geführte Schläuche von Schlauchpumpen treibt.

Der Verlauf der Kurven $S_1$ und $S_2$ ist allgemein dadurch gekennzeichnet, dass beim Befüllen der leeren Küvette das Lichtsignal geschwächt wird, wenn die Flüssigkeitsfront den Strahlengang durchläuft, so dass anschließend nur noch eine geringere Lichtintensität bei den Photozellen ankommt.

Die Kurven $S_1$ und $S_2$ sowie die daraus abgeleiteten Kurven sind schematische Darstellungen, um den Sachverhalt pointiert darzustellen. So ist beispielsweise ein langsamer Signalabfall nach der Ankunft einer Flüssigkeitsfront aufgrund der zunehmenden Extinktion zwischen Probe und Reagenzien im Sinne der Übersichtlichkeit nicht dargestellt.

Die Gruppe der Kurven $S_2$- $S_1$ zeigt eine Differenz zwischen dem Signal der zweiten Photozelle und dem Signal der ersten Photozelle für die verschiedenen Betriebszustände a, a+b, a+b+c. Die Anstiegsflanke und die Abstiegsflanke dieses Differenzsignals kann als Trigger für eine Zeitmessung verwendet werden, um zu ermitteln, wie lange die Flüssigkeitsfront von dem Strahlengang zur ersten Photozelle zu dem Strahlengang zur zweiten Photozelle benötigt. Die Zeitmessung kann digital über einen Zähler oder analog über eine Integratorschaltung erfolgen und ist schematisch in den Kurven $t_a$, $t_{a+b}$, $t_{a+b+c}$ angedeutet. Im normalen Messbetrieb, bei dem Ausführungsbeispiel der Probe 2 Reagenzien zuzusetzen sind, wird dementsprechend die Zeit $t_{a+b+c}$ zu beobachten sein. Von Zeit zu Zeit kann die Mischvorrichtung dadurch überprüft werden, dass die Küvette nur mit der Probe befüllt wird bzw. nur mit der Probe und einem Reagenz. Theoretisch besteht natürlich auch die Möglichkeit, die Küvette nur mit Reagenzien zu befüllen, wobei diese Vorgehensweise auch von der Erfindung umfasst sein soll, sie erscheint jedoch sehr verschwenderisch, da auf diese Weise unverhältnismäßig große Mengen an Reagenzien verbraucht werden.

Im Ausführungsbeispiel wird davon ausgegangen, dass die Mischung 10% des Probenvolumens eines ersten Reagenz und 5% des Probenvolumens eines zweiten Reagenzes enthält. Wenn die Zuförderung eines oder beider Reagenzien in den Referenzmessungen entfällt, dauert es entsprechend länger, bis die Flüssigkeitsfront von der ersten Photozelle zur zweiten Photozelle gelangt. Aus den Zeiten $t_a$, $t_{a+b}$ und $t_{a+b+c}$ lassen sich die Förderraten der einzelnen Pumpen damit folgendermaßen bestimmen:

$$R_a = V * \frac{1}{t_a}$$

$$R_b = V * \frac{t_a - t_{a+b}}{t_a \cdot t_{a+b}}$$

$$R_c = V * \frac{t_{a+b} - t_{a+b+c}}{t_{a+b} \cdot t_{a+b+c}}$$

wobei V das Volumen in der Küvette ist, welches gefördert werden muss, damit nach dem Eintreffen der Flüssigkeitsfront bei der ersten Photozelle die Flüssigkeitsfront bei der zweiten Photozelle eintrifft, und wobei $R_a$ die Förderleistung der Probenpumpe 1, $R_b$ die Förderleistung der ersten Reagenzienpumpe 31 und $R_c$ die Förderleistung der zweiten Reagenzienpumpe 32 ist.

Sollte durch Vergleich mit den Sollwerten der Förderraten festgestellt werden, dass eine oder mehrere dieser Werte sich verändert hat, bzw. haben, so sind diese Werte beispielsweise durch Anpassung der Drehzahl der jeweiligen Pumpe nachzuregeln, um das Mischungsverhältnis der Mischvorrichtung auf dem Sollwert zu halten.

Wie eingangs erwähnt, sind die Schläuche einer Schlauchpumpe einem charakteristischen Alterungsverhalten unterworfen, insoweit kann an der jeweiligen Förderrate der Pumpen der Alterungszustand von Schlauchpumpen erkannt werden.

Dementsprechend kann die Vorrichtung in einer Weiterbildung der

Erfindung ein Signal ausgeben, wenn für den Schlauch einer Förderpumpe aufgrund dessen Alterungsgrad ein Wechsel angezeigt ist. Im soeben beschriebenen Ausführungsbeispiel wurden die Förderraten der Förderpumpen ermittelt, indem die Geschwindigkeit der Flüssigkeitsfront mittels einer Zeitmessung über eine definierte Wegstrecke erfasst wurde, wobei diese definierte Wegstrecke im vorliegenden Fall einen Abstand zwischen der ersten Photozelle und der zweiten Photozelle war. Insoweit, als die Strahlengänge von den Lichtquellen zu den jeweils zu bauenden Photozellen eine gewisse Breite mit einer lateralen Intensitätsverteilung aufweisen, ist der Signalsprung bei der Ankunft der Flüssigkeitsfront nicht unendlich steil, sondern er weist eine endliche Breite auf. Diese Breite des Signalssprungs ist wiederum eine Funktion der Geschwindigkeit der Flüssigkeitsfront. Insoweit kann gemäß einer Abwandlung der ersten Ausgestaltung der Erfindung die Zeit erfasst werden, welche die Flüssigkeitsfront benötigt, einen Strahlengang zu durchlaufen. Diese Zeit entspricht der Dauer des Signalsprungs der Kurven $S_1$ bzw. $S_2$.

Insoweit, als die Dauer eines Signalsprungs deutlich schwieriger zu bestimmen ist, als der zeitliche Abstand zwischen zwei Signalsprüngen, wird derzeit die eingangs beschriebene Alternative der zweiten Alternative vorgezogen, wenngleich letztere auch von der vorliegenden Erfindung umfasst ist.

Im nachfolgenden wird eine zweite Ausgestaltung der vorliegenden Erfindung erläutert, bei welcher lediglich das Signal einer Photozelle ausgewertet wird, nachdem eine Charge der Mischung aus Probe und Reagenzien in die Küvette gelangt ist.

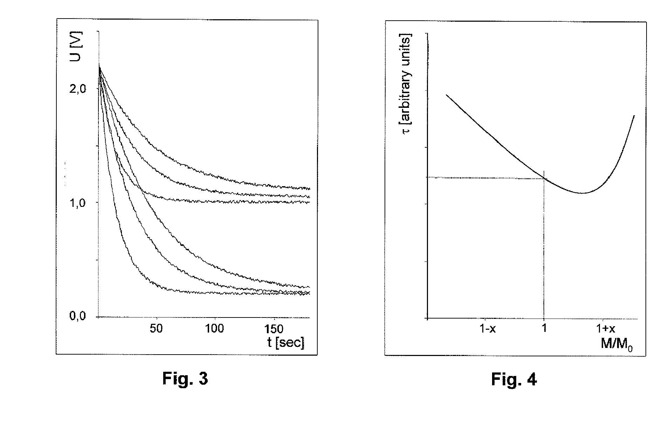

Hierzu zeigt Fig. 3 das Signal der ersten Photozelle als Funktion der Zeit für zwei unterschiedliche Analytkonzentrationen in der Probe. Zum Verständnis des Diagramms ist zu berücksichtigten, dass der Analyt nicht direkt nachgewiesen wird, sondern dass die Extinktion des Lichts durch ein Reaktionsprodukt erfolgt, welches durch Umsetzung des Analyten mit den Reagenzien gebildet wird.

Eine Veränderung des Mischungsverhältnisses durch Zugabe von zuviel oder zu wenig Reagenzien kann dabei sowohl die Reaktionsgeschwindigkeit als auch die Endkonzentration des Reaktionsprodukts in der Mischung der Küvette beeinflussen. Dies manifestiert sich im Extinktionsverhalten in der Mischung, wie anhand der in Fig. 3 dargestellten Signale der ersten Photozelle erkennbar ist.

Zur Bestimmung der Konzentration eines Analyten wird im normalen Messbetrieb der Signalverlauf der ersten Photozelle überwacht, wenn sich das Signal weitgehend stabilisiert hat, wird dieses als Basis zur Berechnung der Extinktion und damit der Konzentration des Analyten in der Probe herangezogen.

Sofern andere Einflüsse auf die Reaktionsgeschwindigkeit eliminiert werden, beispielsweise durch Temperierung der Küvette auf konstante Temperaturen, kann anhand der Reaktionsgeschwindigkeit die Einhaltung des Mischungsverhältnisses der Mischvorrichtung überwacht werden. Hierzu ist zunächst anhand der Signale der Photozelle unter Annahme eines Models eine Zeitkonstante t für die Reaktionsgeschwindigkeit zu bestimmen. Ein einfaches Modell hierfür kann beispielsweise ein exponentieller Reaktionsverlauf sein.

Die Zeitkonstante des Reaktionsverlaufs hängt vom Mischungsverhältnis zwischen den Reagenzien und der Probe ab, wie in Fig. 4 angedeutet ist.

Insoweit, als die Zeitkonstante ohne größeren Aufwand bei jeder Extinktionsmessung gewissermaßen als Hilfsgröße bestimmt werden kann, ist es ohne weiteres möglich, damit die Einhaltung des Mischungsverhältnisses zu überwachen.

Selbstverständlich können die zuvor beschriebenen Methoden auch in Kombination eingesetzt werden. So kann beispielsweise mit der Überwachung der Zeitkonstanten und der Reaktion das Mischungsverhältnis laufend überprüft werden und sobald sich Änderungen im Mischungsverhältnis zeigen, kann die eingangs beschriebene Bestimmung der einzelnen Förderraten der beteiligten Pumpen der Mischvorrichtung erfolgen, um zu überprüfen, welche der Pumpen ggf. für eine Veränderung des Mischungsverhältnisses verantwortlich ist bzw. sind.

Weiterhin kann eine Neukalibrierung durchgeführt werden.

## Patentansprüche

1. Vorrichtung zur Analyse von Flüssigkeitsproben, welche zur Analyse mit mindestens einem Reagenz zu mischen sind, umfassend:

   eine Mischvorrichtung (1, 3, 4, 5) mit mindestens einer Förderpumpe (1,3) zum Mischen der Flüssigkeitsprobe mit dem Reagenz (4a ... 4n) in einem definierten Mischungsverhältnis;
   mindestens einem Sensor (6) zum Erfassen einer Eigenschaft des Gemischs aus der Flüssigkeitsprobe und dem Reagenz, anhand derer eine Messgröße der Flüssigkeitsgröße zu bestimmen ist; und
   eine Auswertungseinheit, welche anhand mindestens eines Signals mindestens eines Sensors bzw. anhand des zeitlichen Verlaufes eines Signals zumindest eines Sensors die Funktion der Mischvorrichtung überprüft.

2. Vorrichtung nach Anspruch 1, wobei die Auswertungseinheit dazu ausgelegt ist, anhand eines Sprungs eines Sensorsignals als Funktion der Zeit den Durchlauf einer Flüssigkeitsfront an dem mindestens einen Sensor zu detektieren und daraus die Förderleistung der Förderpumpe bzw. die Summe der Förderleistungen mehrerer Pumpen abzuleiten.

3. Vorrichtung nach Anspruch 2, wobei die Vorrichtung mindestens zwei Sensoren aufweist, die in einem Flüssigkeitspfad zueinander beabstandet sind, wobei die Auswertungseinheit dazu ausgelegt ist, anhand der zeitlichen Differenz der Signalsprünge am ersten und zweiten Sensor die Geschwindigkeit der Flüssigkeitsfront und damit die Förderleistung der Pumpe bzw. die Summe der Förderleistungen mehrerer Pumpen abzuleiten.

4. Vorrichtung nach Anspruch 1, wobei der zeitliche Verlauf des Sensorsignals bei einer gegebenen Flüssigkeitsprobe vom Mischungsverhältnis zwischen der Flüssigkeitsprobe und dem mindestens einen Reagenz bzw. mehrerer Reagenzien abhängt, und wobei die Auswertungseinheit dazu ausgelegt ist, anhand des zeitlichen Verlaufs des Sensorsignals das Mischungsverhältnis zwischen der Flüssigkeitsprobe und dem mindestens einen Reagenz bzw. der Reagenzien zu überprüfen.

5. Vorrichtung nach einem der vorhergehenden Ansprüche, wobei die Vorrichtung mindestens einen photometrischen Analysator umfasst.

**6.** Vorrichtung nach einem der vorhergehenden Ansprüche, wobei die Förderpumpe der Mischvorrichtung mindestens eine Schlauchpumpe umfasst.

**7.** Vorrichtung nach einem der vorhergehenden Ansprüche, wobei nach der Überprüfung des Mischungsverhältnisses, bei Abweichung von einem Sollwert eine Korrektur des Mischungsverhältnisses erfolgt.

**8.** Vorrichtung nach Anspruch 7, wobei die Korrektur des Mischungsverhältnisses, über eine Nachregelung der Förderrate mindestens einer Pumpe erfolgt.

**Fig. 1**

Fig. 2

Fig. 4

Fig. 3